# EUROPÄISCHE PATENTSCHRIFT

(11) **EP 1 375 848 B1**
(45) Veröffentlichungstag und Bekanntmachung des Hinweises auf die Patenterteilung: **29.12.2004**
(21) Anmeldenummer: 03012842.5
(22) Anmeldetag: 06.06.2003
(51) Int. Cl.: F01N 1/02, F01N 7/18, F01N 7/02, B21D 26/02

(54) **Vorrichtung zur Reduzierung von Schallemissionen und Verfahren zur Herstellung einer solchen Vorrichtung**
Device for reducing the noise emissions and method for production thereof
Dispositif permettant de réduire les émissions sonores et méthode pour la réalisation d'un tel dispositif

(30) Priorität: 29.10.2002 DE 10250237; 18.06.2002 DE 10226985
(43) Veröffentlichungstag der Anmeldung: 02.01.2004
(73) Patentinhaber: Benteler Automobiltechnik GmbH, 33102 Paderborn (DE); Bayerische Motoren Werke Aktiengesellschaft, 80788 München (DE)
(72) Erfinder: Knaup, Heinz Josef, 33165 Lichtenau (DE); Bröckling, Wilhelm, 33106 Paderborn (DE); Stöcker, Ralf, 34414 Warburg (DE); Kutscha, Markus, 4451 Garsten (AT); Keber, Andreas, 4400 Steyr (AT); Schroecker, Christian, 4400 Steyr (AT); Löw, Thomas, 3543 Krumau/Kamp (DE); Pollhammer, Rainer, 4040 Linz (AT)

(56) Entgegenhaltungen:
- EP-A- 0 647 771
- EP-A- 0 714 087
- DE-A- 19 956 165
- DE-B- 1 052 173
- DE-B- 1 242 939
- GB-A- 2 243 404
- US-A- 4 213 414

## Beschreibung

Die Erfindung betrifft ein Verfahren zur Herstellung einer Vorrichtung zur Reduzierung von Schallemissionen, umfassend ein Außenrohr aus Metall und ein das Außenrohr zumindest abschnittsweise durchsetzendes Innenrohr aus Metall mit einem Einlass an seinem ersten Ende und einem Auslass an seinem zweiten Ende, wobei zwischen dem Innenrohr und dem Außenrohr wenigstens eine Absorptionskammer ausgebildet ist, welche über wenigstens eine im Längenabschnitt der Absorptionskammer im Innenrohr angeordnete Öffnung mit einem im Innenrohr geführten Gasstrom fluidleitend verbunden ist gemäß den Merkmalen im Oberbegriff des Patentanspruchs 1.

Strömungsgeräusche, insbesondere im Ansaugtrakt eines Turboladers einer Verbrennungsmaschine, machen es sinnvoll, definierte Geometrien (Schalldämpfer) in die Luft zuführenden Leitungen einzubringen, welche durch ihre Ausformung und Anordnung in der Lage sind, bestimmte Frequenzbereiche zu dämpfen. Die insbesondere in der Nähe eines Turboladers herrschenden Temperaturen und Druckspitzen stellen hohe Anforderungen an die Dauerfestigkeit der eingesetzten Werkstoffe. Bevorzugt werden daher Metalle verwendet. Gleichzeitig wird im Kraftfahrzeugbau eine möglichst leichte und insbesondere auch kompakte Bauweise angestrebt, wodurch der zur Verfügung stehende Bauraum in motornahen Bereichen grundsätzlich sehr klein ist.

Im Stand der Technik sind eine Reihe von Vorschlägen zur Gestaltung von Schalldämpfern gemacht worden. Beispielsweise beschreibt die DE 199 56 165 A1 einen Schlitzrohrdämpfer aus Metall mit einem Innenrohr und einem Außenrohr, wobei zwischen dem Innenrohr und dem Außenrohr mehrere im Abstand zueinander angeordnete Absorptionskammern ausgebildet sind. Das Außenrohr kann dabei durch eine geeignete Druckbeaufschlagung von Halbzeugrohren hergestellt sein, so dass in ein aufgeweitetes Außenrohr ein Innenrohr eingeschoben und befestigt werden kann. Der beschriebene Schlitzrohrdämpfer mit dem Innenrohr und dem Außenrohr erstreckt sich nur über einen Teilbereich eines insgesamt längeren Leitungsstranges. In der Regel schließen sich weitere rohrförmige Längenabschnitte an den Einlass und den Auslass eines Schalldämpfers an. Diese können beispielsweise über Flanschverbindungen oder auch über stoffschlüssige Verbindungen wie z.B. Verschweißen mit dem Schalldämpfer verbunden sein. Der fertigungstechnische Aufwand für die Ausgestaltung einer solchen gasführenden Leitung unter Eingliederung eines Schalldämpfers ist nicht unerheblich. Ferner sind dreidimensional gebogene Gas führende Leitungen mit einem zwischengegliederten Schalldämpfer relativ komplexe Bauteile, bei denen es teilweise nicht möglich ist, bekannte langgestreckte Schalldämpferstrukturen aufgrund ihrer Geometrie fertigungstechnisch zu realisieren.

Aus der DE 10 52 173 B ist ein Schalldämpfer bekannt, der ein Außenrohr aus Metall und ein das Außenrohr zumindest abschnittsweise durchsetzendes Innenrohr aus Metall mit einem Einlass an seinem ersten Ende und einem Auslass an seinem zweiten Ende umfasst, wobei zwischen dem Innenrohr und dem Außenrohr wenigstens eine Absorptionskammer ausgebildet ist, welche über wenigstens eine im Längenabschnitt der Absorptionskammer im Innenrohr angeordnete Öffnung mit einem im Innenrohr geführten Gasstrom fluidleitend verbunden ist. Dabei befindet sich das mit Löchern versehene Innenrohr unter anderem in einem gekrümmten Abschnitt des Außenrohres. Auf das Herstellungsverfahren wird nicht weiter eingegangen, es ist lediglich offenbart, dass es sich um ein herausnehmbares oder fest eingebautes akustisches Filter handeln kann. Zudem befindet sich das Filter nahe der Endöffnung des Außenrohres.

Hiervon ausgehend liegt der Erfindung die Aufgabe zugrunde, ein Verfahren zur Herstellung einer eingangs genannten Vorrichtung zur Reduzierung von Schallemissionen aufzuzeigen, wobei sich die Vorrichtung dadurch auszeichnet, dass sie besonders einfach und kostengünstig herstellbar ist und wobei mit dem Herstellungsverfahren auch komplexe Bauteilgeometrien bei sehr begrenztem Bauraumvolumen realisierbar sind.

Die Erfindung löst diese Aufgabe durch die Merkmale der Patentansprüche 1 bis 8.

Als eine Maßnahme kommt dabei das Verfahren der Innenhochdruckumformung (IHU) zur Anwendung. Vorbereitend wird zunächst ein Innenrohr mit den für den späteren Gasaustausch zwischen dem Innenrohr und den Absorptionskammern vorgesehenen Öffnungen versehen. Die Gestaltung der Öffnungen kann dabei in weiten Bereichen variieren. Die Öffnungen können beispielsweise in Längsrichtung des Innenrohrs ausgebildete Längsschlitze oder sich in Umfangsrichtung erstreckende Schlitze sein. Eine Vielzahl von einzelnen Perforationen in Form von kreisrunden und ovalen Löchern ist ebenso möglich.

Erfindungsgemäß ist vorgesehen, dass ein derartig vorbereitetes Innenrohr in ein Außenrohr eingeführt wird, und dieses Doppelrohr je nach geometrischer Ausgestaltung der gewünschten Vorrichtung in die gewünschte dreidimensionale Form gebogen wird. Anschließend wird die Vorrichtung dem IHU-Verfahren unterzogen, um durch innere Druckbeaufschlagung die Absorptionskammern des Außenrohrs auszubilden. Durch eine entsprechende Ausgestaltung des IHU-Werkzeugs können bei diesem Vorgang auch definierte Oberflächenstrukturen in der Form von Prägungen in das Außenrohr eingebracht werden, die ebenfalls schallabsorbierend und resonanzmindemd wirken. Durch die Oberflächenstrukturen wird eine Verfestigung des Resonanzraumes erreicht. Besonders günstig können beim IHU-Verfahren die Öffnungen im Innenrohr, die eigentlich für den späteren Gasaustausch mit der Absorptionskammer vorgesehen sind, für den Übergang des Druckfluids in den Zwischenbereich zwischen Innenrohr und Außenrohr bzw. in die abschließend ausgebildete Absorptionskammer genutzt werden.

Als weitere vorteilhafte Maßnahme wird es angesehen, das Innenrohr mit dem Außenrohr stoffschlüssig und/ oder formschlüssig zu verbinden. Das Außenrohr kann beispielsweise durch Löten oder Schweißen mit dem Innenrohr verbunden werden. Auch ein gegenseitiges Verprägen ist möglich, insbesondere auch zwischen den verschiedenen Absorptionskammem durch Kalibrieren der beiden Rohre nach dem IHU-Vorgang. Dies kann auch gleichzeitig mit der eingangs- und ausgangsseitigen Gestaltung der Anschlüsse geschehen. Die Anschlüsse können beispielsweise Bördel oder Sicken sein. Selbstverständlich sind auch Verbindungsmuffen oder ähnliche Anschlussmittel an der Vorrichtung vorsehbar sowie anbringbar.

Die mit dem erfindungsgemäßen Verfahren hergestellte Vorrichtung zur Reduzierung von Schallemissionen zeichnet sich zunächst dadurch aus, dass sich das Außenrohr über die mit Absorptionskammern versehenen Längenabschnitte hinaus im wesentlichen über die gesamte Länge des Innenrohrs erstreckt. Das heißt, dass die gesamte Vorrichtung im wesentlichen als Doppelrohr ausgestaltet ist. Ein einstückig ausgeführtes Innenrohr ist hierbei von einem ebenfalls einstückig gestalteten Außenrohr umgeben. Das hat den Vorteil, dass keine Verbindungsmittel zwischen dem eigentlichen Schalldämpfer und den sich anschließenden Rohrabschnitten mehr erforderlich sind. Durch die Reduzierung der Teilevielfalt können Fertigungsschritte, wie beispielsweise Verschrauben oder Verschweißen mehrerer Längenabschnitte eingespart werden. Die doppelwandige Ausgestaltung der Vorrichtung ermöglicht einerseits eine sehr bauraumsparende Konfiguration und eröffnet zum anderen wesentliche fertigungstechnische Vorteile, insbesondere ist die Prozesssicherheit bei der Fertigung verbessert.

Ferner zeichnet sich die mit dem erfindungsgemäßen Verfahren hergestellte Vorrichtung auch dadurch aus, dass das Innenrohr und/ oder das Außenrohr im Längenabschnitt wenigstens einer Absorptionskammer in ihrer Längserstreckung zumindest abschnittsweise gekrümmt ausgeführt werden. Bei dieser Ausgestaltung ist es möglich, die Absorptionskammem nicht nur an im wesentlichen geraden Längenabschnitten eines Leitungsstranges vorzusehen, sondern vielmehr im Bereich der Biegungen eines einfach oder mehrfach gebogenen Leitungsstrangs. Durch diese Art der Anordnung der Absorptionskammer können besonders bauraumsparende Vorrichtungen zur Reduzierung von Schallemissionen realisiert werden, die aus strömungstechnischer Sicht zugleich eine verbesserte Gasführung ermöglichen. Unter Umständen kann eine Gestaltung der Vorrichtung gewählt werden, bei der auf im wesentlichen gerade gestaltete Längenabschnitte vollständig verzichtet wird, das heißt, die Vorrichtung wird in ihrer Längserstreckung vollständig von sich gegebenenfalls dreidimensional aneinander anschließenden Bogenabschnitten gebildet, die jeweils fließend ineinander übergehen, wobei gleichzeitig neben der verbesserten strömungstechnischen Ausbildung eine Reduzierung der Schallemissionen möglich ist.

Wenn die Funktion der Schalldämpfung wie aufgezeigt auch in den gekrümmten Bereichen eines Doppelrohrs möglich ist, kann der insbesondere im Motorraum knappe Bauraum um so besser ausgenutzt werden. Zugleich erlaubt eine Schalldämpferlösung aus Metall eine besonders motomahe Anbindung. Folglich eignet sich das beschriebene erfindungsgemäße Verfahren zur Herstellung einer Schalldämpferlösung aus Metall besonders für knappe, verwinkelte und der Motorwärme ausgesetzte Bauräume, die mit den bisherigen Lösungen gar nicht oder nur begrenzt auszufüllen sind.

Eine möglich Ausgestaltung einer mit dem erfindungsgemäßen Verfahren hergestellten Vorrichtung wird anhand der Figuren näher erläutert.
Figur 1 zeigt in schematischer Darstellung im Teilschnitt eine Vorrichtung 1 zur Reduzierung von Schallemissionen.
Figur 2 zeigt ebenfalls im Teilschnitt eine Vorrichtung 24 zur Reduzierung von Schallemissionen mit Prägungen 33 bis 38 im Außenrohr 25.
Figur 3 zeigt die Vorrichtung 24 in einer Draufsicht.
Figur 4 zeigt die Vorrichtung 24 von vome.

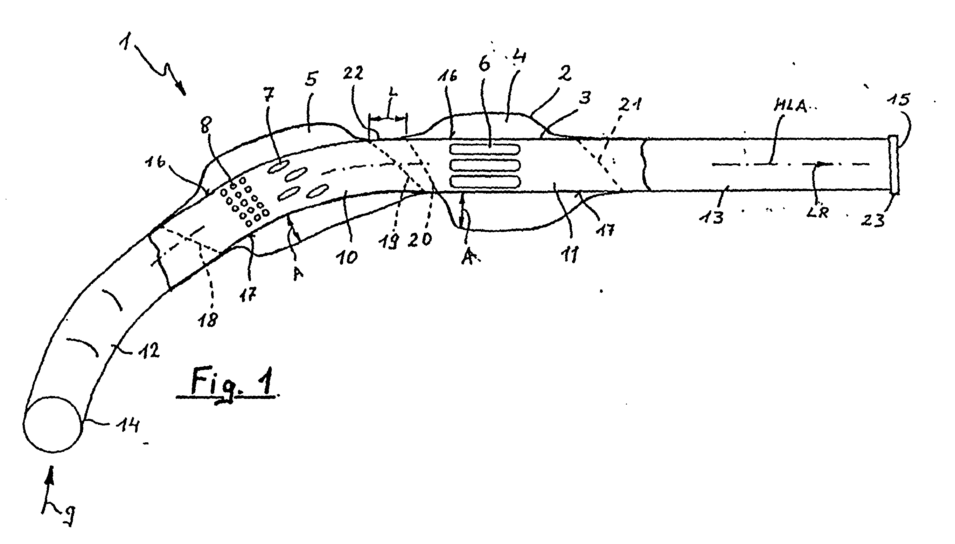

Figur 1 zeigt in schematischer Darstellung im Teilschnitt eine Vorrichtung 1 zur Reduzierung von Schallemissionen. Die Vorrichtung 1 ist über ihre gesamte Länge doppelwandig ausgeführt, bestehend aus einem Außenrohr 2 und einem Innenrohr 3. Das Außenrohr 2 weist im mittleren Bereich zwei Ausbauchungen auf, die als Absorptionskammer 4, 5 zur Reduzierung von Schallemissionen dienen. Das besondere an dieser Ausgestaltung ist, dass sich die Absorptionskammer 5 und die Öffnungen 7 und 8 des Innenrohrs 3 im gekrümmten Bereich der Vorrichtung 1 befinden. Die erfindungsgemäße Vorrichtung 1 ist grundsätzlich dreidimensional gebogen, das heißt, dass der Einlass 14 und der Auslass 15 in unterschiedlichen räumlichen Ebenen liegen können, wobei sich die Ebenen in beliebigen Winkeln schneiden. Selbstverständlich können der Einlass 14 und der Auslass 15 auch in zueinander parallelen oder sogar in ein und derselben Ebene liegen, wobei jedoch der Verlauf der Vorrichtung 1 zwischen dem Einlass 14 und dem Auslass 15 einen beliebigen dreidimensionalen Pfad einnehmen kann.

Die Absorptionskammem 4, 5, die im Rahmen der Vorrichtung 1 den eigentlichen Schalldämpfungsbereich darstellen, sind einstückig aus dem Außenrohr 2 geformt, welches sich im wesentlichen über die gesamte Länge des Innenrohrs 3 erstreckt. Die Absorptionskammem 4, 5 sind im Innenhochdruckumformverfahren hergestellt, wobei ein Druckmedium (Fluid oder auch Gas) durch Öffnungen 6, 7, 8 aus dem Innenrohr 3 heraus an das Außenrohr 2 herangeführt wird, wodurch sich das Außenrohr 2 im Rahmen einer durch die Gravur eines Umformwerkzeugs begrenzten Geometrie aufweiten kann. Das Werkzeug kann sich bei bestimmten Werkstoffen (z.B. Aluminium) in einem aufgeheizten Zustand befinden. Die Öffnungen 6, 7, 8 können dabei unterschiedlich konfiguriert sein.

Exemplarisch sind drei verschiedene Arten von Öffnungen 6, 7, 8 dargestellt. Es ist möglich, mehrere in axialer Richtung beabstandete Reihen umfangsseitig verteilter kreisrunder Löcher 8 vorzusehen, die in der Art einer Perforierung angeordnet und ausgestaltet sind.

Es sind aber auch elliptische Öffnungen 7 oder aber auch sich in Längsrichtung LR erstreckende und über den Umfang des Innenrohrs 3 verteilte Längsschlitze 6 möglich. Die Öffnungen 6, 7, 8 ermöglichen, dass ein in die Vorrichtung 1 eintretender Gasstrom 9 mit den Absorptionskammern 4, 5 kommunizierend in Verbindung steht. Je nach Ausgestaltung der Öffnungen 6, 7, 8 sowie der Querschnittskonfiguration der Absorptionskammem 4, 5 können bestimmte Frequenzbereiche der durch den Gasstrom 9 erzeugten Schwingungen gedämpft werden. Hierzu befinden sich die Öffnungen 6, 7, 8 selbstverständlich in den Längenabschnitten 10, 11 der Absorptionskammem 4, 5. Die genaue Anordnung der Öffnungen 6, 7, 8 innerhalb der Längenabschnitte 10, 11 ergibt sich in Abhängigkeit derjenigen Frequenzen, die gedämpft werden sollen.

Es ist zu erkennen, dass die Absorptionskammer 5 unsymmetrisch ausgestaltet ist. Sie ist weder spiegelsymmetrisch bezüglich einer durch die Mittelängsachse MLA verlaufenden Längsebene noch rotationssymmetrisch. Femer weichen auch die Absorptionskammem 4, 5 untereinander in ihren Querschnittskonfigurationen voneinander ab. In dem dargestellten Ausführungsbeispiel besitzt beispielsweise die Absorptionskammer 5 in ihrem in der Bildebene oben liegenden ersten Umfangbereich 16 eine geringer Längserstreckung als in ihrem gegenüber liegenden Umfangsbereich 17. Es ist auch zu erkennen, dass die Absorptionskammer 5 in ihrem oberen Umfangsbereich 16 in Längsrichtung betrachtet etwas länger ausgebildet ist als an ihrem gegenüber liegenden Umfangsbereich 17. Die unterbrochen gezeichneten Linien stellen jeweils den Anfang 18, 20 und das Ende 19, 21 der Absorptionskammem 4, 5 dar.

Die Absorptionskammer 4 zeichnet sich dadurch aus, dass der radiale Abstand A zwischen dem Innenrohr 3 und dem Außenrohr 2 im Längenbereich 11 der Absorptionskammer 4 in ihrem unteren Umfangsbereich 17 teilweise größer ist als in ihrem gegenüber liegenden Umfangsbereich 16. Der Abstand A verändert sich in Richtung der Mittellängsachse MLA kontinuierlich. Er kann beispielsweise in einem ersten Umfangsbereich 17 der Absorptionskammer 5 zunächst stärker zunehmen als in seinem zweiten Umfangsbereich 16. Der Abstand A nimmt in Längserstreckung des Innenrohrs 2 im ersten Umfangsbereich 17 jedoch langsamer ab als im zweiten Umfangsbereich 16.

Der Abstand A ist jeweils der radial auf die Mittellängsachse MLA des Innenrohrs 3 gemessene Abstand. Grundsätzlich ist vorgesehen, dass das Außenrohr 2 fluiddicht an dem Innenrohr 3 anliegt, wobei die axiale Länge L einer Kontaktfläche 22 zwischen Innenrohr 3 und Außenrohr 2 über den Umfang des Innenrohrs variieren kann. Dies wird anhand des mit unterbrochener Linie eingezeichneten Endes 19 sowie des Anfangs 20 der Absorptionskammern 4, 5 deutlich.

Die gesamte Vorrichtung kann auf unterschiedlichste Art und Weise an nicht näher dargestellte Komponenten angeschlossen sein. Hierzu ist in diesem Ausführungsbeispiel am Auslass 15 ein Ringflansch 23 ausgebildet. Ebenso können auch Sicken oder ähnliche Möglichkeiten zur Anbindung der Vorrichtung 1 vorgesehen sein. Selbstverständlich ist auch eine Querschnittserweiterung, z. B. zur Ausgestaltung einer Verbindungsmuffe, möglich.

Durch die Möglichkeiten der Freiformgestaltung beim Innenhochdruckumformverfahren kann die Kontur des Außenrohrs 2 abhängig von Werkstoff und Rohrwanddicke verschieden große Kammervolumen bilden, die einerseits an die zu absorbierenden Frequenzbereiche sowie andererseits an die unterschiedlichsten Bauräume angepasst werden können. Die erfindungsgemäße Vorrichtung eignet sich insbesondere zum Einsatz in platzkritischen Bauräumen sowie bei hohen Drücken und Temperaturen. Durch die Wanddicke des Innenrohrs 3 sowie des Außenrohrs 2, die Größe und Anzahl der Öffnungen 6, 7, 8 und dem Abstand A des Außenrohrs 2 von dem Innenrohr 3 werden die Größen der Absorptionskammern 4, 5 und damit die zu absorbierenden Frequenzbereiche eingestellt. Ein besonderer Vorteil der erfindungsgemäßen Vorrichtung ist die Ausnutzung des Innenhochdruckumformverfahrens zur Ausgestaltung frei geformter Querschnitte für die Reduzierung der Schallemissionen.

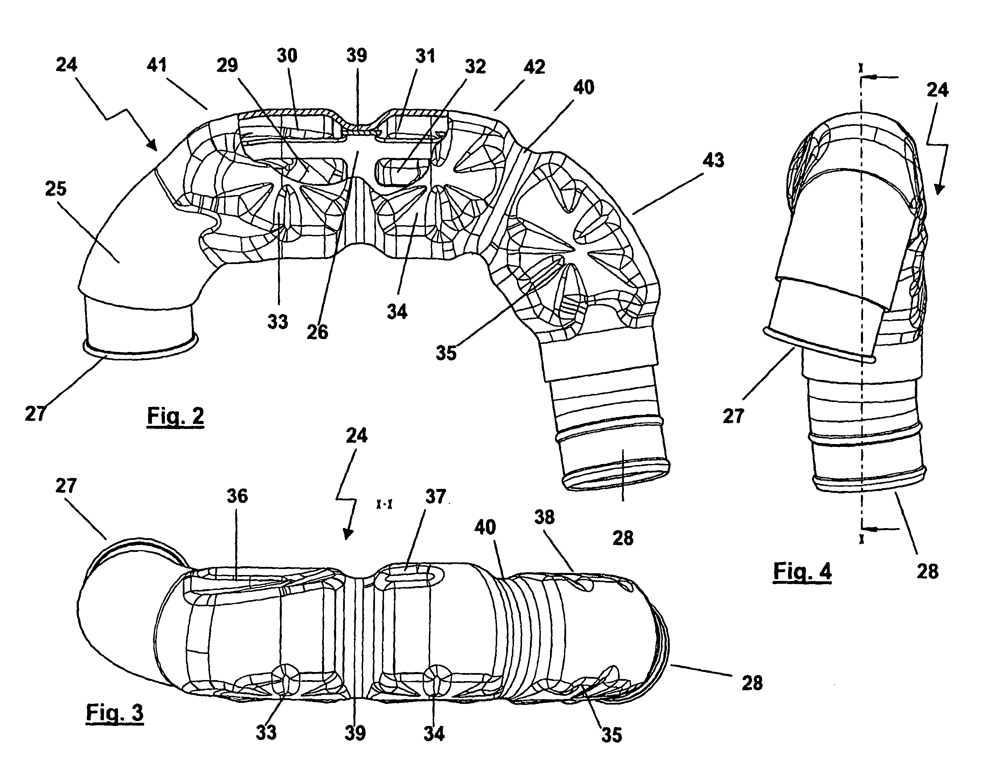

In Figur 2 ist eine Vorrichtung 24 zur Reduzierung von Schallemissionen ebenfalls im Teilschnitt dargestellt. Die Vorrichtung 24 besteht aus einem Außenrohr 25, einem Innenrohr 26 mit Längsschlitzen 29, 30, 31, 32 und einer Einlassöffnung 27 sowie einer Auslassöffnung 28. Die Vorrichtung 24 verfügt über drei Absorptionskammem 41, 42, 43, wobei die Absorptionskammer 42 über ihre Längserstreckung im wesentlichen gerade, die Absorptionskammer 43 jedoch über ihre Längserstreckung gekrümmt ausgeführt ist. Im Außenrohr 25 sind Prägungen 33, 34, 35 zur besseren Schallabsorption eingebracht. Sowohl die Absorptionskammern 41, 42, 43 selbst als auch die eingebrachten Prägungen 33, 34, 35 lassen sich einfach und prozesssicher im Innenhochdruckverfahren herstellen. Die Ausformung der Prägungen 33, 34, 35 ist dabei abhängig von den zu dämpfenden Schallfrequenzen. Zwischen den Absorptionskammem 41 und 42 sowie zwischen den Absorptionskammern 42 und 43 wurde das Außenrohr 25 nach dem Aufweiten mittels eines Innenhochdruckverfahrens an den Stellen 39 und 40 so kalibriert, dass das Außenrohr 25 fluiddicht am Innenrohr 26 anliegt und so drei von einander getrennte Absorptionskammem 41, 42, 43 ausgebildet sind.

Figur 3 zeigt die Vorrichtung 24 in einer Draufsicht. Hierbei sind die beidseitigen voneinander abweichenden Prägungen 33, 34, 35, 36, 37, 38 im Außenrohr 25 zu erkennen. Durch die ausgeprägte Krümmung der Vorrichtung 24 zeigen sowohl die Einlassöffnung 27 als auch die Auslassöffnung 28 in die Bildebene hinein.

Figur 4 zeigt, dass bei der Vorrichtung 24 die Einlassöffnung 27 bezüglich der Ansichtsebene X-X zu einer Seite hin abweicht, während die Auslassöffnung 28, wenn auch geringer als die Einlassöffnung 27, zur anderen Seite der Ansichtsebene hin abweicht.

### Bezugszeichenaufstellung:

- 1-: Vorrichtung
- 2-: Außenrohr von 1
- 3-: Innenrohr von 1
- 4-: Absorptionskammer an 2
- 5-: Absorptionskammer an 2
- 6-: Öffnung in 3
- 7-: Öffnung in 3
- 8-: Öffnung in 3
- 9-: Gasstrom
- 10-: Längenabschnitt
- 11-: Längenabschnitt
- 12-: Längenabschnitt
- 13-: Längenabschnitt
- 14-: Einlass von 1
- 15-: Auslass von 1
- 16-: Umfangsbereich
- 17-: Umfangsbereich
- 18-: Anfang von 5
- 19-: Ende von 5
- 20-: Anfang von 4
- 21-: Ende von 4
- 22-: Kontaktfläche zwischen 2 und 3
- 23-: Ringflansch
- 24-: Vorrichtung
- 25-: Außenrohr von 24
- 26-: Innenrohr von 24
- 27-: Einlass von 24
- 28-: Auslass von 24
- 29-: Längsschlitz in 26
- 30-: Längsschlitz in 26
- 31-: Längsschlitz in 26
- 32-: Längsschlitz in 26
- 33-: Prägung in 25
- 34-: Prägung in 25
- 35-: Prägung in 25
- 36-: Prägung in 25
- 37-: Prägung in 25
- 38-: Prägung in 25
- 39-: kalibrierte Stelle von 25
- 40-: kalibrierte Stelle von 25
- 41-: Absorptionskammer an 25
- 42-: Absorptionskammer an 25
- 43-: Absorptionskammer an 25

- A-: Abstand zwischen 2 und 3
- L-: Länge von 22
- LR-: Längsrichtung von 1
- MLA-: Mittellängsachse von 1
- X-X-: Ansichtsebene

## Patentansprüche

1. Verfahren zur Herstellung einer Vorrichtung zur Reduzierung von Schallemissionen, umfassend ein Außenrohr (2) aus Metall und ein das Außenrohr (2) zumindest abschnittsweise durchsetzendes Innenrohr (3) aus Metall mit einem Einlass (14) an seinem ersten Ende und einem Auslass (15) an seinem zweiten Ende, wobei zwischen dem Innenrohr (3) und dem Außenrohr (2) wenigstens eine Absorptionskammer (4, 5) ausgebildet ist, welche über wenigstens eine im Längenabschnitt (10, 11) der Absorptionskammer (4, 5) im Innenrohr (3) angeordnete Öffnung (6, 7, 8) mit einem im Innenrohr (3) geführten Gasstrom fluidleitend verbunden ist,
**dadurch gekennzeichnet,**
**dass** das Innenrohr (3) in einem Längenbereich (10, 11) einer an einem Außenrohr (2) auszubildenden Absorptionskammer (4, 5) mit für den späteren Gasaustausch zwischen dem Innenrohr (3) und den Absorptionskammern (4, 5) vorgesehenen Öffnungen (6, 7, 8) versehen wird,
anschließend das Innenrohr (3) in das Außenrohr (2) eingeführt wird,
die ineinander gesteckten Innenrohre (3) und Außenrohre (2) dreidimensional gebogen werden
und am Außenrohr (2) durch Innenhochdruckumformung (IHU) Absorptionskammern (4, 5) ausgebildet werden.

2. Verfahren nach Anspruch 1,
**dadurch gekennzeichnet,**
**dass** das Innenrohr (3) mit dem Außenrohr (2) stoffschlüssig und/oder formschlüssig verbunden wird.

3. Verfahren nach einem der Ansprüche 1 oder 2,
**dadurch gekennzeichnet,**
**dass** während des Formens des Außenrohrs (25) mittels Innenhochdruck eine Prägung (33, 34, 35, 36, 37, 38) im Außenrohr (25) eingebracht wird.

4. Verfahren zur Herstellung einer Vorrichtung nach einem der vorangegangenen Ansprüche,
**dadurch gekennzeichnet,**
**dass** das Innenrohr (3) und/ oder das Außenrohr (2) im Längenabschnitt (10) wenigstens einer Absorptionskammer (5) in ihrer Längserstreckung zumindest abschnittsweise gekrümmt ausgeführt werden.

5. Verfahren zur Herstellung einer Vorrichtung nach einem der vorhergehenden Ansprüche,
**dadurch gekennzeichnet,**
**dass** das Außenrohr (2) zwischen einander benachbarten Absorptionskammern (4, 5) nach dem IHU-Vorgang fluiddicht an dem Innenrohr (3) anliegend belassen oder durch Kalibrieren fluiddicht an das Innenrohr (3) angelegt wird.

6. Verfahren zur Herstellung einer Vorrichtung nach einem der vorhergehenden Ansprüche,
**dadurch gekennzeichnet,**
**dass** wenigstens eine Absorptionskammer (4, 5) in Bezug auf eine Längsebene des Innenrohrs (3) weder spiegelsymmetrisch noch in Bezug auf eine Mittellängsachse des Innenrohrs (3) rotationssymmetrisch ausgebildet wird.

7. Verfahren zur Herstellung einer Vorrichtung nach einem der vorhergehenden Ansprüche,
**dadurch gekennzeichnet,**
**dass** die Absorptionskammern (4, 5) in ihrer Querschnittskonfiguration voneinander abweichend hergestellt werden.

8. Verfahren zur Herstellung einer Vorrichtung nach einem der vorhergehenden Ansprüche,
**dadurch gekennzeichnet,**
**dass** der Abstand (A) zwischen Innenrohr (3) und Außenrohr (2) im Längenbereich (11) einer Absorptionskammer (4) in einem ersten Umfangsbereich (17) größer ausgebildet wird als in einem zweiten Umfangsbereich (16).

## Claims

1. A method for producing a device for reducing sound emissions, comprising an outer pipe (2) made of metal and an inner pipe (3) made of metal that penetrates the outer pipe (2), at least in certain sections, and has an inlet (14) at its first end and an outlet (15) at its second end, at least one absorption chamber (4, 5), which is connected in a fluid-conducting manner via at least one aperture (6, 7, 8), which is arranged in the inner pipe (3) in the longitudinal portion (10, 11) of the absorption chamber (4, 5), to a gas stream guided in the inner pipe (3), being configured between the inner pipe (3) and the outer pipe (2), **characterised in that**, in a longitudinal region (10, 11) of an absorption chamber (4, 5) to be configured on an outer pipe (2), the inner pipe (3) is provided with apertures (6, 7, 8) for the subsequent gas exchange between the inner pipe (3) and the absorption chambers (4, 5), the inner pipe (3) is then inserted into the outer pipe (2), the interconnected inner pipes (3) and outer pipes (2) are three-dimensionally bent, and absorption chambers (4, 5) are configured on the outer pipe (2) by internal high-pressure formation (IHPF).

2. A method according to claim 1, **characterised in that** the inner pipe (3) is connected to the outer pipe (2) with material fit and/or with positive fit.

3. A method according to either claim 1 or claim 2, **characterised in that**, during the internal high-pressure forming of the outer pipe (25), an embossing (33, 34, 35, 36, 37, 38) is inserted in the outer pipe (25).

4. A method for producing a device according to any one of the preceding claims, **characterised in that**, in the longitudinal portion (10) of at least one absorption chamber (5), the inner pipe (3) and/or the outer pipe (2) are curved in their longitudinal extension, at least in certain sections.

5. A method for producing a device according to any one of the preceding claims, **characterised in that,** after the IHPF process, the outer pipe (2) abuts the inner pipe (3) between adjacent absorption chambers (4, 5) in a fluid-tight manner, or is attached to the inner pipe (3) in a fluid-tight manner by means of calibration.

6. A method for producing a device according to any one of the preceding claims, **characterised in that** at least one absorption chamber (4, 5) is neither mirror-symmetrical with respect to a longitudinal plane of the inner pipe (3), nor rotationally symmetrical with respect to a central longitudinal axis of the inner pipe (3).

7. A method for producing a device according to any one of the preceding claims, **characterised in that**, in their sectional configuration, the absorption chambers (4, 5) differ from each other.

8. A method for producing a device according to any one of the preceding claims, **characterised in that**, in the longitudinal region (11) of an absorption chamber (4), the distance (A) between the inner pipe (3) and the outer pipe (2) is greater in a first peripheral region (17) than in a second peripheral region (16).

## Revendications

1. Procédé de fabrication d'un dispositif de réduction d'émissions sonores comprenant un tube extérieur (2) en métal et un tube intérieur (3) en métal traversant au moins par segments, le tube extérieur (2) comportant une entrée (14) sur sa première extrémité et une sortie (15) sur sa deuxième extrémité, avec au moins une chambre d'absorption (4, 5) entre le tube intérieur (3) et le tube extérieur (2) reliée pour conduire un fluide à un flux de gaz passant dans le tube intérieur (3) par l'intermédiaire d'au moins une ouverture (6, 7, 8) disposée dans le tronçon longitudinal (10, 11) de la chambre d'absorption (4, 5) à l'intérieur du tube intérieur (3)
**caractérisé en ce que**
dans une zone longitudinale (10, 11) d'une chambre d'absorption (4, 5) à aménager sur un tube extérieur (2), le tube intérieur (3) est doté d'ouvertures (6, 7, 8) prévues pour l'échange ultérieur de gaz entre le tube intérieur (3) et les chambres d'absorption (4, 5),
ensuite le tube intérieur (3) est introduit dans le tube extérieur (2),
les tubes intérieurs (3) et les tubes extérieurs (2) emboîtés sont recourbés en trois dimensions,
et des chambres d'absorption (4, 5) sont aménagées sur le tube extérieur (2) par hydroformage (HF).

2. Procédé selon la revendication 1,
**caractérisé en ce que**
le tube intérieur (3) est relié au tube extérieur (2) par liaison de matière et/ou par liaison de forme.

3. Procédé selon l'une quelconque des revendications 1 ou 2,
**caractérisé en ce que**
pendant le formage du tube extérieur (25) sous haute pression interne, on pratique un estampage (33, 34, 38, 36, 37, 38) dans le tube extérieur (25).

4. Procédé de fabrication d'un dispositif selon l'une quelconque des revendications précédentes,
**caractérisé en ce que**
le tube intérieur (3) et/ou le tube extérieur (2) est/sont recourbé(s), au moins par segments, dans le tronçon longitudinal (10) d'au moins une chambre d'absorption (5) dans son étendue longitudinale.

5. Procédé de fabrication d'un dispositif selon l'une quelconque des revendications précédentes,
**caractérisé en ce que**
le tube extérieur (2), entre des chambres d'absorption (4, 5) voisines reste plaqué contre le tube intérieur (3) de manière étanche aux fluides après l'opération d'hydroformage ou est plaqué contre le tube intérieur (3) de manière étanche aux fluides par calibrage.

6. Procédé de fabrication d'un dispositif selon l'une quelconque des revendications précédentes,
**caractérisé en ce que**
au moins une chambre d'absorption (4, 5) n'est pas aménagée en symétrie miroir par rapport à un plan longitudinal du tube intérieur (3) ni symétrique en rotation par rapport à un axe longitudinal central du tube intérieur (3).

7. Procédé de fabrication d'un dispositif selon l'une quelconque des revendications précédentes,
**caractérisé en ce que**
les chambres d'absorption (4, 5) sont réalisées avec des sections différentes l'une de l'autre.

8. Procédé de fabrication d'un dispositif selon l'une quelconque des revendications précédentes,
**caractérisé en ce que**
dans la zone longitudinale (11) d'une chambre d'absorption (4), la distance (A) entre le tube intérieur (3) et le tube extérieur (2) est plus importante dans une première zone périphérique (17) que dans une deuxième zone périphérique (16).
